# EUROPÄISCHE PATENTSCHRIFT

(11) **EP 1 110 115 B1**
(45) Veröffentlichungstag und Bekanntmachung des Hinweises auf die Patenterteilung: **16.10.2002**
(21) Anmeldenummer: 99953580.0
(22) Anmeldetag: 24.08.1999
(51) Int. Cl.: G02B 6/38

(54) **STECKVORRICHTUNG FÜR EINEN LICHTWELLENLEITER**
CONNECTING DEVICE FOR AN OPTICAL WAVEGUIDE
DISPOSITIF DE CONNEXION POUR UN GUIDE D'ONDE OPTIQUE

(30) Priorität: 04.09.1998 DE 19840442
(43) Veröffentlichungstag der Anmeldung: 27.06.2001
(73) Patentinhaber: TYCO Electronics Logistics AG, 9323 Steinach (CH)
(72) Erfinder: BAUER, Jürgen, D-68159 Mannheim (DE)
(74) Vertreter: Hirsch, Peter, Dipl.-Ing.
(86) Internationale Anmeldenummer: DE9902646
(87) Internationale Veröffentlichungsnummer: WO00014584

(56) Entgegenhaltungen:
- EP-A- 0 574 015
- CH-A- 679 080
- US-A- 4 743 084
- US-A- 4 941 727
- US-A- 5 088 804
- US-A- 5 394 497

## Beschreibung

Die Erfindung betrifft eine Steckvorrichtung für einen Lichtwellenleiter mit einem Steckergehäuse, das ein als Hülse zur Aufnahme des Lichtwellenleiters ausgebildetes Führungsteil aufweist, welches den Lichtwellenleiter umgreift, so daß dieser axial fixiert ist, wobei eine elastische Dichtung den Lichtwellenleiter eng anliegend umfaßt. Eine solche Steckvorrichtung ist in CH 679 080 offenbart.

Lichtwellenleiter haben in jüngster Zeit eine bedeutende Verbreitung gefunden, insbesondere im digital arbeitenden Kommunikationsbereich, da hiermit eine erhöhte Datenübertragungsrate erreichbar ist.

Bei der Ankoppelung von elektro-optischen Sendern, wie Leucht- oder Laserdioden, und/oder elektro-optischen Empfängern, wie Photodioden oder Phototransistoren, an Lichtwellenleiter, die von lichtleitenden Fasern gebildet werden, oder bei der Verbindung von getrennt geführten licht leitenden Fasern miteinander, ergibt sich stets die Notwendigkeit eines störungsfreien Übergangs des Lichtsignals um Übertragungsfehler beziehungsweise große Übergangsverluste zu vermeiden.

Dies bedeutet, daß die endseitigen Stirnflächen der lichtleitenden Fasern äußerst glatt sein müssen, was im allgemeinen durch Bearbeitung mit entsprechender hoher optischer Güte erreicht wird, so daß die Endflächen möglichst plan an den betreffenden Ankopplungsflächen der elektro-optischen Bauteile anliegen.

Vorzugsweise sind für diese Ankopplung besondere Verbindungsstücke, insbesondere Steckverbinder, vorgesehen, welche endseitig an die betreffenden Lichtwellenleiter dauerhaft, das heißt unlösbar, angesetzt sind. Hierbei ist der Lichtwellenleiter in einer zum Verbindungsstück gehörigen etwa kreiszylindrischen Hülse geführt und in geeigneter Weise mit dem Verbindungsstück verbunden, indem dieses den Lichtwellenleiter radial umgreift, so daß dieser axial fixiert ist.

Üblicherweise liegt die Hülse unter Vorspannung am Lichtwellenleiter an, um so eine Barriere zu bilden. Jedoch kann infolge von Fertigungstoleranzen oder infolge von alterungsbedingtem Nachlassen der Elastizität des Hülsenmaterials zwischen dem Lichtwellenleiter und der Hülse ein geringer unter Umständen kreisringförmiger Spalt bestehen, durch welchen gegebenenfalls Verunreinigungen in das Innere des Verbindungsstückes eindringen können, was sich nachteilig auf die Funktion auswirken kann. Daher ist hierbei unbedingt darauf zu achten, daß das Eindringen von Schmutz, Staub und Wasser vermieden wird.

Für den besonderen Fall, daß Polymer-Lichtleiter in einem Automobil eingesetzt werden, ergeben sich gegenüber den ansonsten üblichen Anwendungen innerhalb von Gebäuden oder in Innenräumen deutlich verschärfte Einsatzbedingungen, die insbesondere auf die am Einsatzort vorherrschenden Vibrationen sowie die Temperaturwechsel zurückzuführen sind, wodurch sich die Umgebungsbedingungen ständig ändern.

Hieraus resultiert das Problem, daß die bisher verfügbaren optischen Steckverbinder für Anwendungen unter diesen schwierigen Bedingungen im allgemeinen nicht ausreichend geschützt sind.

Das Endstück des als Lichtwellenleiter bezeichneten optischen Kabels wird bei den meisten bekannten optischen Steckverbindern durch ein kleines, als Ferrule bezeichnetes Röhrchen gebildet, welches fest mit dem Ende der lichtleitenden Faser verbunden ist und diese umschließt. Das Eindringen von Verunreinigungen zwischen dem optischen Kabel und der Ferrule, sowie zwischen der Ferrule und dem Gehäuse des eigentlichen Steckverbinders, muß dabei zuverlässig verhindert werden.

Meist werden bei optischen Steckverbindern gar keine besonderen konstruktiven Vorkehrungen getroffen, um das Eindringen von Verunreinigungen zwischen dem optischen Kabel und der Ferrule, sowie zwischen der Ferrule und dem Gehäuse zu verhindern.

Es gibt eine Reihe von Gestaltungen der Ferrule, bei welchen eine gewisse Abdichtung zwischen dem optischen Kabel und der Ferrule erreicht wird.

Aus dem AMP Technical Journal ist ein System bekannt, bei welchem das Kabel angeklemmt wird, und die Endfläche des Lichtleiters von einem gelgefüllten, transparenten Einsatz umschlossen wird.

Ferner ist aus dem US-Patent-Nr. 4643520 sowie aus dem deutschen Gebrauchsmuster DE 29709602 Ul eine Gestaltung bekannt geworden, bei welcher der Lichtleiter angeklemmt wird und dabei von einem innen gerillten Röhrchen umschlossen ist.

Eine weitere Möglichkeit ist eine thermische Bearbeitung unter Einsatz des sogenannten Hotplating-Prozesses, wobei der Lichtwellenleiter ebenfalls von einem innen gerillten Röhrchen umschlossen ist.

In keinem der zuvor angesprochenen Fälle ist das Problem der Abdichtung angesprochen beziehungsweise durch entsprechende Vorkehrungen zwischen der Ferrule und dem Gehäuse des eigentlichen Steckverbinders erreicht, um den erhöhten Anforderungen an die Dichtheit gerecht zu werden.

Ausgehend von diesem Stand der Technik ist es Aufgabe der Erfindung eine der eingangs genannten Art anzugeben, die mit möglichst geringem Aufwand herstellbar ist und hierbei eine zuverlässige Abdichtung zwischen dem Lichtwellenleiter und der als Ferrule bezeichneten Hülse vorsieht, so daß eine sichere Funktion gewährleistet ist.

Diese Aufgabe wird erfindungsgemäß durch die kennzeichnenden Merkmale des Patentanspruchs 1 gelöst.

Weitere vorteilhafte Ausgestaltungen und Verbesserungen der Erfindung sind in den hiervon abhängigen Unteransprüchen behandelt.

Dementsprechend ist gemäß der Erfindung vorgesehen, daß wenigstens ein Abschnitt des von der Hülse gebildeten Endstücks als Dichtung ausgebildet ist, welche elastisch ausgebildet ist und den Lichtwellenleiter enganliegend umfaßt.

Die abdichtende Wirkung beruht also darauf, daß ein Abschnitt der Ferrule selbst als Dichtung ausgeführt ist. Dies wird erreicht, indem die Ferrule aus einem harten Kunststoff im Spritzgußverfahren gefertigt wird, an welche eine Sektion aus einem weichen Kunststoff ebenfalls im Spritzgußverfahren angeformt wird. Der besondere Vorteil der erfindungsgemäß vorgesehenen Lösung ergibt sich durch die wirtschaftliche Fertigung und den veringerten Montageaufwand.

Weitere Vorteile sind, daß der harte und der weiche Teil dabei eine unlösbare Verbindung eingehen und daß das Werkstück mit einer einzigen Maschine in einem Arbeitsgang komplett hergestellt werden kann.

Ferner führt die funktionale Integration, gemäß welcher die Dichtung zum Kabel und die Dichtung zum Gehäuse durch ein einziges Element gebildet sind, zu einer Erhöhung der Funktionssicherheit der erfindungsgemäßen Steckvorrichtung.

In weiterer vorteilhafter Weiterbildung der erfindungsgemäßen Steckvorrichtung ist der aus hartem Material gebildete Haltebereich dem freien Ende des Lichtwellenleiters zugewandt. Hierbei ist der Lichtwellenleiter im Haltebereich formschlüssig gehalten.

Entsprechend einer bevorzugten Ausführungsform der Steckvorrichtung weist der in der Hülse ausgebildete Dichtungsbereich angeformte Radialringe auf, welche sich eng an den Lichtwellenleiter anlegen und hierdurch den Zutritt von Verunreinigungen in den Ringspalt zwischen dem Lichtwellenleiter und dem diesen umfassenden Endstück verhindern. Die Geometrie dieser angeformten Radialringe entspricht näherungsweise der von O-Ringen, die auf den Durchmesser des betreffenden Lichtwellenleiters abgestimmt sind.

Gemäß einer ebenfalls sehr vorteilhaften Weiterbildung der erfindungsgemäßen Steckvorrichtung sind zusätzliche Dichtringe vorgesehen, welche vorzugsweise mit den im Dichtungsbereich angeformten Radialringen zusammenarbeiten und beispielsweise ebenfalls die Geometrie von O-Ringen besitzen.

Die erfindungsgemäße Steckvorrichtung weist gegenüber den im Stand der Technik bekannten Lösungen große Vorteile aus, die teilweise bereits erwähnt beziehungsweise erläutert wurden, hier aber nachfolgend nochmals herausgestellt werden sollen.

Der erfindungsgemäße Steckverbinder ist einstückig, wobei der harte und der weiche Teil dabei eine unlösbare Verbindung eingehen.

Der erfindungsgemäße Steckverbinder kann mit und in einer einzigen Maschine in einem Arbeitsgang komplett hergestellt werden, was den Herstellaufwand reduziert, indem die Herstelldauer hierdurch deutlich verringert und damit die Herstellkosten gesenkt werden.

Hierdurch sowie durch die vergleichsweise einfache Geometrie ist eine gute Automatisierbarkeit bei der Montage der Lichtwellenleiter gewährleistet.

Ebenso trägt die bereits erwähnte funktionale Integration des erfindungsgemäßen Steckverbinders, gemäß welcher die Abdichtung zum Kabel und die Abdichtung zum Gehäuse von einem einzigen Dichtelement sichergestellt ist, zu einer Verringerung des Herstellaufwandes des erfindungsgemäßen Steckverbinders bei gleichzeitig verbesserter Funktionalität und Betriebssicherheit bei.

Aufgrund der erfindungsgemäß vorgesehenen Gestaltung des Steckverbinders resultiert auch eine Platzersparnis, welche darüber hinaus eine kompaktere Gestaltung der Anschlußbauteile beziehungsweise der zugehörigen Funktionseinheiten erlaubt.

Ebenso ist durch die erfindungsgemäße Einstückigkeit des Steckverbinders gleichzeitig auch die Unverlierbarkeit der Dichtungen erreicht.

Kurz zusammengefaßt läßt sich der besondere Vorteil des erfindungsgemäßen optischen Steckverbinders wie folgt darstellen. Der optische Steckverbinder ist mit einem als Hülse oder als Ferrule bezeichneten rohrförmigen Einsatz versehen, welcher zu dem Gehäuse und zu dem optischen Kabel abgedichtet wird, indem ein Segment dieses Einsatzes aus einem weichen Material gefertigt wird und dabei gleichzeitig die Abdichtung nach außen zu dem Gehäuse und nach innen zu dem Kabel bewirkt. Dieses weiche Segment wird vorteilhafterweise dadurch erzeugt, daß es im Spritzgußverfahren auf den harten Einsatz aufgebracht und dadurch mit diesem unlösbar verbunden wird.

Diese und weitere vorteilhafte Ausgestaltungen und Verbesserungen der Erfindung sind Gegenstand der Unteransprüche.

Anhand eines in der schematischen Zeichnung dargestellten Ausführungsbeispiels der Erfindung sollen die Erfindung, vorteilhafte Ausgestaltungen und Verbesserungen der Erfindung sowie besondere Vorteile der Erfindung näher erläutert und beschrieben werden. Es zeigen:
- Fig. 1: einen schematischen Längsschnitt einer ersten Ausführungsform einer Steckvorrichtung gemäß dem Stand der Technik;
- Fig. 2: einen schematischen Längsschnitt einer zweiten Ausführungsform einer Steckvorrichtung gemäß dem Stand der Technik;
- Fig. 3: einen schematischen Längsschnitt einer dritten Ausführungsform einer Steckvorrichtung gemäß dem Stand der Technik;
- Fig. 4: eine bevorzugte Ausführungsform der erfindungsgemäßen Steckvorrichtung im Teillängsschnitt in Schrägansicht und
- Fig. 5: die Steckvorrichtung im Teillängsschnitt in Schrägansicht.

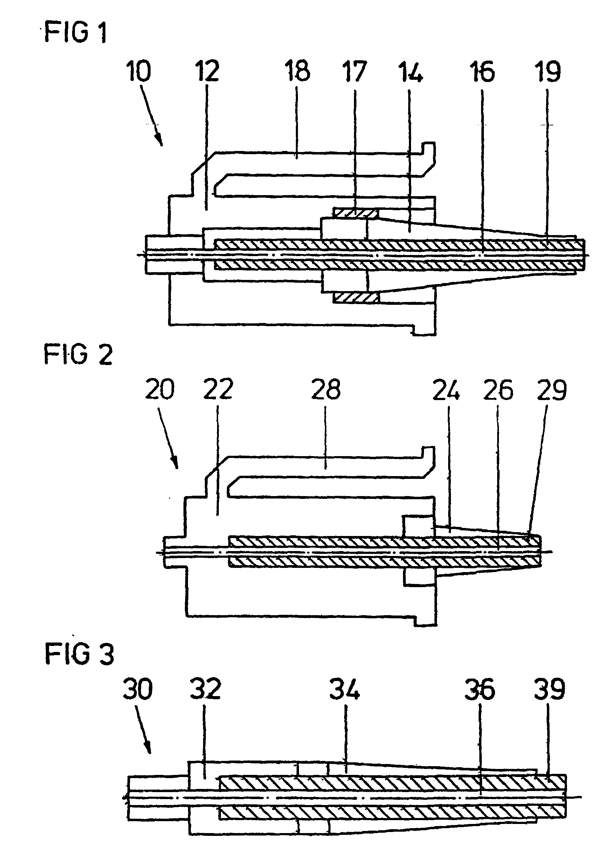

In Fig. 1 ist eine erste Ausführungsform einer Steckvorrichtung 10 gemäß dem Stand der Technik in Längsschnitt schematisch wiedergegeben, bei welcher in ein aus Hartplastik geformtes, den vorderen Anschluß bildendes Gehäuse ein Insertteil 14 koaxial eingesetzt ist. Die Außenkontur des Gehäuses 12 ist standardisiert und an entsprechende Steckeraufnahmen, die hier nicht dargestellt sind, angepaßt. Zwischen beiden ist ein Dichtring 17 aus Elastomer eingefügt.

Dieses Insertteil 14 überragt das rückwärtige Ende des Gehäuses 12 um etwa die halbe Länge des Gehäuses 12 und bildet so einen Knickschutz für einen zunächst das Insertteil 14 und dann das Gehäuse 12 zentral durchgreifenden Lichtwellenleiter 16, der an der vorderen Stirnseite des Gehäuses 12 mit diesem plan abschließt. Des weiteren ist der Lichtwellenleiter 16 von einem Schutzmantel 19 umgeben, welcher nicht ganz bis an das vordere Ende des Lichtwellenleiters 16 heranreicht. Ein an der Oberseite des Gehäuses angeformter Rastbügel 18 dient zur Verrastung des Gehäuses in der Einbauposition.

Diese erste Variante einer bekannten Steckvorrichtung ist gut herstellbar und repräsentiert eine bewährte Technologie. Eine besondere mechanische Abdichtung zum Lichtwellenleiter 16 ist hierbei nicht vorgesehen, da das Insertteil 14 am Lichtwellenleiter 16 dicht anliegt und so ein enger Spalt gewährleistet ist.

Allerdings ist die Bestückung dieser Steckvorrichtung 10, das heißt die Montage des Lichtwellenleiters 16 in dem Insertteil 14 und in dem Gehäuse 12, recht aufwendig, da zur Sicherung von Insertteil 14 und Lichtwellenleiter 16 zusätzlich der erwähnte Dichtring 17 auf das Insertteil aufgepreßt wird. Ferner kann zur besseren Abdichtung eine Dichtmasse in die Steckvorrichtung 10 eingepreßt oder eingegossen werden.

Fig. 2 zeigt eine zweite Ausführungsform einer Steckvorrichtung 20 gemäß dem Stand der Technik im schematischen Längsschnitt, bei welcher in ein ebenfalls aus Hartplastik geformtes, den vorderen Anschluß bildendes Gehäuse 22 rückwärtig ein aus Elastomer gebildetes koaxiales Führungsteil 24 für einen Lichtwellenleiter 26 integriert ist. Auch hier ist der Lichtwellenleiter 26 von einem Schutzmantel 29 umgeben, welcher nicht ganz bis an das vordere Ende des Lichtwellenleiters 26 heranreicht. Auch dieses Gehäuse 22 besitzt die gleiche Außenkontur wie das in Fig. 1 gezeigte Gehäuse 12.

Das koaxiale Führungsteil 24 steht am hinteren Ende über, das heißt, es überragt das rückwärtige Ende des Gehäuses 22 um etwa ein Drittel dessen Gesamtlänge und bildet so ebenfalls einen Knickschutz für einen zunächst in das Führungsteil 24 eingeführten und dann das Gehäuse zentral durchgreifenden Lichtwellenleiter 26, der an der vorderen Stirnseite des Gehäuses 12 mit diesem plan abschließt. Auch hier dient ein an der Oberseite des Gehäuses angeformter Rastbügel 28 zur Verrastung des Gehäuses in der Einbauposition.

Auch hierbei handelt es sich um eine einfache und preiswert herstellbare Steckvorrichtung 20, deren Bestückung mit dem Lichtwellenleiter 26 sehr ungünstig ist, da dieser auf eine vergleichsweise große Länge ein die zentrale Aufnahmeöffnung des Gehäuses 22 eingeschoben werden muß, wobei hier ein Einknicken des Lichtwellenleiters 26 leicht auftreten kann.

Fig. 3 schließlich zeigt einen schematischen Längsschnitt einer dritten Ausführungsform einer Steckvorrichtung 30 gemäß dem Stand der Technik, bei welcher in ein ebenfalls aus Hartplastik geformtes, den vorderen Anschluß bildendes Insertteil 32 am rückwärtigen Ende ein aus einem Elastomer geformtes Teil 34 koaxial eingesetzt ist. Der den Lichtwellenleiter 36 umgebende Schutzmantel ist mit 39 bezeichnet. In Fig. 3 ist das Gehäuse nicht dargestellt.

Das Teil 34 steht am hinteren Ende über, das heißt, es überragt das rückwärtige Ende des Insertteils 32 um das etwa Einbis Zweifache dessen Gesamtlänge und bildet so ebenfalls einen vorzüglichen Knickschutz für einen zunächst in das Teil 34 eingeführten und dann in das Insertteil 32 zentral durchgreifenden Lichtwellenleiter 36, der an der vorderen Stirnseite des Insertteils 32 mit diesem plan abschließt.

Die hier vorgesehen Technologie hat sich bewährt und ist einfach und preiswert herzustellen. Allerdings muß hierbei mit einem erhöhten Funktionsrisiko gerechnet werden, da eine Abdichtung zwischen dem Lichtwellenleiter 36 und dem Teil 34 beziehungsweise dem Insertteil 32 nur außen, das heißt ausschließlich mittels einer engen Anlage des Teils 34, vorgesehen ist.

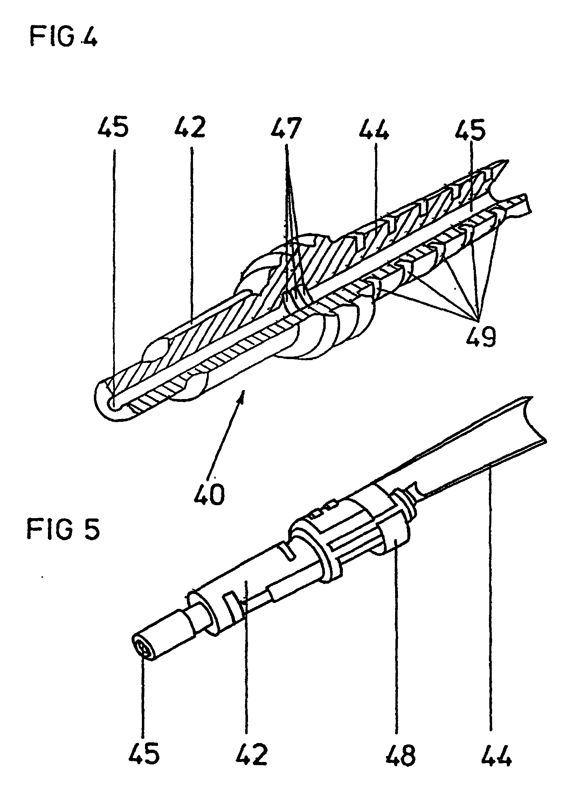

In den Fig. 4 und 5 ist eine bevorzugte Ausführungsform der erfindungsgemäßen Steckvorrichtung 40 in unterschiedlicher Darstellung gezeigt.

In Fig. 4 ist eine Schrägansicht der erfindungsgemäßen Steckvorrichtung 40 dargestellt, wobei über die gesamte Länge ein Sektor von etwa einem Viertel des Querschnittes entnommen ist, um so einerseits die Außenkontur und andererseits die erfindungsgemäße Gestaltung der Abdichtung zu zeigen.

In Fig. 5 hingegen ist der vordere Steckteil der Steckvorrichtung ebenfalls in Schrägansicht komplett gezeigt, das heißt ungeschnitten, während der rückwärtige Teil im Teillängsschnitt dargestellt ist.

Die erfindungsgemäße Steckvorrichtung 40 ist ein länglicher, mehrstufig abgesetzter Körper mit kreiszylindrischem Querschnitt, der ähnlich den aus dem Stand der Technik bekannten Gestaltungen ein Anschlußgehäuse 42 aus biegesteifem Material aufweist, welches mit einer hier nicht näher dargestellten Aufnahmevorrichtung zusammenarbeitet.

An dieses Anschlußgehäuse 42 schließt unterbrechungsfrei ein einstückig angeformtes Führungsteil 44 an, welches aus einem Elastomer besteht und gemeinsam mit dem Anschlußgehäuse mittels eines sogenannten Zwei-Komponenten-Verfahrens (2K-Verfahren) hergestellt wird.

Das Anschlußgehäuse 42 und das Führungsteil 44 besitzen je eine koaxial zueinander verlaufende zentrale Durchgangsöffnung 45, welche zur Aufnahme eines hier jedoch nicht dargestellten Lichtwellenleiters 46 dient.

Dem Übergang vom Führungsteil 44 zum Anschlußgehäuse 42 unmittelbar benachbart ist die Durchgangsöffnung 45 im Führungsteil 44 mit erfindungsgemäß vorgesehenen radial angeordneten Dichtringen 47 bestückt, welche einstückig mit der Innenwandung der Durchgangsöffnung 45 verbunden sind. Dies wird erreicht, indem sie ebenfalls gemeinsam, das heißt gleichzeitig, mit dem Anschlußgehäuse 42 und dem Führungsteil 44 gefertigt werden.

Diese Dichtringe 47 dienen dazu, sich radial an einen in der Durchgangsöffnung 45 befindlichen, hier jedoch nicht dargestellten Lichtwellenleiter anzulegen und so einerseits eine völlig ausreichende und andererseits eine sehr kostengünstig herstellbare zuverlässige Abdichtung zu bilden, welche das Eindringen von jeglichen Verunreinigungen, wie Staub und Schmutz, oder von Feuchtigkeit, wie Wasser, in das Innere der Steckvorrichtung 40 verhindert.

Diese erfindungsgemäß vorgesehe Gestaltung hat neben der betrieblichen beziehungsweise funktionellen Sicherheit darüber hinaus den Vorteil, daß die Dichtringe 47 unverlierbar sind, da sie auch dann an der Steckvorrichtung 40 verbleiben, wenn aus irgendwelchen Gründen ein eingeführter Lichtwellenleiter entfernt werden sollte.

Um einen eingeführten Lichtwellenleiter fest mit der erfindungsgemäßen Steckvorrichtung 40 zu verbinden, kann ein in Fig. 5 gezeigter Crimpring 48 vorgesehen sein, der das am Anschlußgehäuse 42 einstückig angeformte Führungsteil 44 außen umklammert.

Um die Elastizität des Führungsteils 44 als Knickschutz zu nutzen, erweist es sich als vorteilhaft, das Führungsteil 44 mit in axialem Abstand zueinander angeordneten radialen Ringnuten 49 zu versehen, welche eine kontrollierte Abknickung des Führungsteils 44 gestatten.

## Patentansprüche

1. Steckvorrichtung (40) für einen Lichtwellenleiter mit einem Gehäuse (42), das ein als Hülse zur Aufnahme des Lichtwellenleiters ausgebildetes Führungsteil aufweist, welches den Lichtwellenleiter umgreift, so daß dieser axial fixiert ist, wobei eine elastische Dichtung (47) den Lichtwellenleiter eng anliegend umfaßt,
**dadurch gekennzeichnet, daß** an das Gehäuse unterbrechungsfrei und einstückig das von der Hülse gebildete Führungsteil (44) angeformt ist, und in oder nahe dem Übergangsbereich zwischen Führungsteil (44) und Gehäuse (42) die Dichtung (47) angeformt ist.

2. Steckvorrichtung nach Anspruch 1,
**dadurch gekennzeichnet, daß** die Steckvorrichtung (40) als Zweikomponenten-Bauteil ausgebildet ist, das einen aus hartem Material gebildeten Haltebereich und die aus weichem Material gebildete Dichtung aufweist.

3. Steckvorrichtung nach Anspruch 2,
**dadurch gekennzeichnet, daß** der aus hartem Material gebildete Haltebereich dem freien Ende des Lichtwellenleiters zugewandt ist und von einem Anschlußgehäuse (42) gebildet ist, in welchem der Lichtwellenleiter formschlüssig gehalten ist.

4. Steckvorrichtung nach einem der vorherigen Ansprüche,
**dadurch gekennzeichnet, daß** die vom Führungsteil (44) gebildete Dichtung einstückig mit dem vom Anschlußgehäuse (42) gebildeten Haltebereich verbunden ist.

5. Steckvorrichtung nach einem der vorherigen Ansprüche,
**dadurch gekennzeichnet, daß** die im Führungsteil (44) ausgebildete Dichtung mindestens einen angeformten Dichtring (47) aufweist, welcher sich an den Lichtwellenleiter anlegt und den Eintritt von Verunreinigungen in den Ringspalt zwischen dem Lichtwellenleiter und dem Führungsteil (44) verhindert.

6. Steckvorrichtung nach Anspruch 5,
**dadurch gekennzeichnet, daß** mehrere Dichtringe (47) vorgesehen sind.

7. Steckvorrichtung nach einem der vorherigen Ansprüche,
**dadurch gekennzeichnet, daß** die vom Gehäuse (42) und dem einstückig daran angeformten Führungsteil (44) gebildete Steckvorrichtung (40) mit dem darin integrierten Haltebereich und der Dichtung mittels Spritzgußwerkzeug gefertigt ist.

## Claims

1. A connecting device (40) for an optical waveguide, having a housing (42) with a guide part which is constructed as a sleeve for receiving the optical waveguide and which reaches around the optical waveguide so that the latter is axially fixed, with a resilient seal (47) enclosing the optical waveguide in closely abutting manner,
**characterised in that** the guide part (44) formed by the sleeve is integrally formed on the housing uninterruptedly and in one piece therewith, and the seal (47) is integrally formed in or close to the region of transition from the guide part (44) to the housing (42).

2. A connecting device according to Claim 1, **characterised in that** the connecting device (40) is constructed as a two-component part which has a holding region formed from hard material and the seal formed from soft material.

3. A connecting device according to Claim 2, **characterised in that** the holding region formed from hard material faces the free end of the optical waveguide and is formed by a connecting housing (42) in which the optical waveguide is held form-fittingly (i.e. in an interlocking manner).

4. A connecting device according to one of the preceding claims, **characterised in that** the seal formed by the guide part (44) is connected in one piece with the holding region formed by the connecting housing (42).

5. A connecting device according to one of the preceding claims, **characterised in that** the seal constructed in the guide part (44) has at least one integrally formed sealing ring (47) which abuts against the optical waveguide and prevents impurities from entering the annular gap between the optical waveguide and the guide part (44).

6. A connecting device according to Claim 5, **characterised in that** a plurality of sealing rings (47) are provided.

7. A connecting device according to one of the preceding claims, **characterised in that** the connecting device (40), formed by the housing (42) and the guide part (44) integrally formed thereon in one piece therewith, and having the holding region integrated therein and the seal, is made by means of an injection mould.

## Revendications

1. Dispositif de connexion (40) pour un guide d'ondes optiques comportant un boîtier (42), comportant une partie de guidage ayant la forme d'une douille pour la réception du guide d'ondes optiques, entourant le guide d'ondes optiques de sorte à assurer sa fixation axiale, un joint élastique (47) entourant étroitement le guide d'ondes optiques,
**caractérisé en ce que** le boîtier est relié sans interruption et d'une seule pièce à la partie de guidage (44) formée par la douille, le joint (47) étant agencé dans la zone de transition entre la partie de guidage (44) et le boîtier (42) ou en un point proche de celle-ci.

2. Dispositif de connexion selon la revendication 1, **caractérisé en ce que** le dispositif de connexion (40) est un élément à deux composants, comportant une zone de retenue composée d'un matériau dur et un joint composé d'un matériau mou.

3. Dispositif de connexion selon la revendication 2, **caractérisé en ce que** la zone de retenue composée de matériau dur est orientée vers l'extrémité libre du guide d'ondes optiques et est constituée par un boîtier de raccordement (42) dans lequel le guide d'ondes optiques est fermement verrouillé.

4. Dispositif de connexion selon l'une des revendications précédentes, **caractérisé en ce que** le joint formé par la partie de guidage (44) est relié d'une seule pièce à la zone de retenue formée par le boîtier de raccordement (42).

5. Dispositif de connexion selon l'une des revendications précédentes, **caractérisé en ce que** le joint formé dans la partie de guidage (44) comporte au moins une bague d'étanchéité intégrale (47), entourant le guide d'ondes optiques et empêchant la pénétration d'impuretés dans la fente annulaire entre le guide d'ondes optiques et la partie de guidage (44).

6. Dispositif de connexion selon la revendication 5, **caractérisé en ce qu'**il comporte plusieurs bagues d'étanchéité (47).

7. Dispositif de connexion selon l'une des revendications précédentes, **caractérisé en ce que** le dispositif de connexion (40) formé par le boîtier (42) et la partie de guidage (44) qui y est agencée d'une seule pièce est fabriqué avec la zone de retenue qui y est intégrée et le joint par un dispositif de moulage par injection.
